# FASCICULE DE BREVET EUROPEEN

(11) **EP 1 110 184 B1**
(45) Date de publication et mention de la délivrance du brevet: **15.01.2003**
(21) Numéro de dépôt: 99940260.5
(22) Date de dépôt: 31.08.1999
(51) Int. Cl.: G07B 15/02

(54) **SYSTEME MOBILE DE TELEPAIEMENT DES DROITS D'ACCES A DES SERVICES A L'USAGE DES AUTOMOBILISTES, RENOUVELABLE A DISTANCE PAR RADIOMESSAGERIE**
MOBILES FERNBEZAHLSYSTEM MIT AUF ABSTAND MITTELS FERNÜBERTRAGUNG WIEDERAUFLADBAREN ZUGANGSRECHTEN ZU GEBRAUCHSDIENSTLEISTUNGEN FÜR AUTOFAHRER
MOBILE TELEPAYMENT SYSTEM FOR ACCESS RIGHTS TO SERVICES FOR MOTORISTS, RENEWABLE BY REMOTE DISPLAY PAGING

(30) Priorité: 01.09.1998 FR 9810902
(43) Date de publication de la demande: 27.06.2001
(73) Titulaire: FRANCE TELECOM exploitant public, 75015 Paris (FR)
(72) Inventeur: FIORI, Costantino, F-38130 Echirolles (FR)
(74) Mandataire: Audier, Philippe André
(86) Numéro de dépôt international: FR9902072
(87) Numéro de publication internationale: WO00013148

(56) Documents cités:
- EP-A- 0 785 534
- EP-A- 0 786 747
- WO-A-96/38819
- WO-A-97/14124
- WO-A-97/45814
- WO-A-98/04080
- US-A- 5 382 780

## Description

### Domaine technique

La présente invention concerne un système mobile de télépaiement des droits d'accès à des services à l'usage des automobilistes, renouvelable à distance par radiomessagerie, utilisé pour des services dédiés au stationnement payant, par exemple sur voirie, et/ou au télépéage, par exemple au passage des péages des autoroutes.

### Etat de la technique antérieure

Un document de l'art connu, référencé [1] en fin de description, décrit un système de comptabilisation du temps, notamment pour la comptabilisation de durées de stationnement payant. Ce système comprend essentiellement :
- une carte à mémoire dont chaque position mémoire peut être inscrite individuellement et irréversiblement, chacune de ces positions correspondant à un crédit d'unités de durée allouée en contrepartie d'un paiement préalable de la carte ;
- un boîtier pour recevoir cette carte, placé par l'automobiliste derrière son pare-brise, et comprenant un circuit d'écriture, périodiquement déclenché sous contrôle d'un circuit d'horloge, permettant l'inscription irréversible, au fur et à mesure de l'écoulement du temps, d'une position de la mémoire de la carte introduite dans le boîtier.

Ce système permet de remplacer les pièces de monnaie par des cartes à microcircuit prépayées et les horodateurs ou autres dispositifs monnayeurs par des boîtiers individuels mis à la disposition des usagers, qui débitent automatiquement la carte prépayée du montant correspondant au temps réel de stationnement, en affichant des informations destinées aussi bien à l'usager qu'au personnel de surveillance.

Bien que le système décrit dans le document [1] représente un progrès par rapport au paiement numéraire du stationnement au moyen de parcmètres ou d'horodateurs, il présente un certain nombre d'inconvénients pour les exploitants et pour les usagers. Ces inconvénients apparaissent clairement au vu de leurs objectifs respectifs :

### Objectifs des exploitants

- Doubler le taux d'occupation des places de stationnement sur voirie : passer de 2,7 heures/jour à 5,4 heures/jour.
- Améliorer la rentabilité du parc de stationnement, en particulier en réduisant les charges qui représentent 40 % du chiffre d'affaires.
- Aligner les procès verbaux (P.V.) sur la norme européenne : 250 francs (contre 75 francs pour un P.V. classe 1 actuel).
- Mobiliser 4,3 milliards de recettes supplémentaires en crédibilisant le système de stationnement.
- Crédibiliser le service rendu auprès du public :
   - en facilitant le paiement,
   - en informant en temps réel les automobilistes de la disponibilité géographique des places de stationnement,
   - en fluidifiant le trafic du centre des villes par cette information des usagers,
   - en améliorant l'efficacité des contrôles,
   - en améliorant la qualité de la surveillance contre les vols.

### Besoins des usagers

- Stationnement de proximité sur voirie (centre ville, rues commerçantes).
- Information sur l'accessibilité et les disponibilités géographiques des places.
- Rotation élevée des places disponibles.
- Service simple, rapide, pratique.
- Paiement par systèmes monétiques embarqués.

Confronté aux objectifs des exploitants, le système considéré ci-dessus ne peut répondre techniquement au besoin essentiel de gestion dynamique du parc que ceux-ci attendent. C'est un système embarqué statique : la carte prépayée est débitée en fonction du temps par l'horloge interne du boîtier qui réalise l'inscription irréversible sur la carte. La fréquence de l'horloge étant préprogrammée à la construction du boîtier, toute modulation ou modification tarifaire des prix du stationnement par le ou les exploitants du service ne peut se faire qu'en remplaçant les cartes prépayées existantes par de nouvelles, construites selon les nouveaux paramètres d'exploitation du service. Il ne fournit aucune information sur les points essentiels mentionnés plus haut. Ce système tend même à appauvrir l'information à la disposition des exploitants. Il n'existe aucun moyen de contrôle permettant de savoir si une place de stationnement est occupée ou libre. Ce système présente de plus une sécurité relativement faible pour les cartes prépayées : pour les contrôles municipaux, celles-ci sont uniquement identifiées par un numéro de série, il est donc très facile de cloner ces cartes de manière à frauder le système en construisant un système de débit factice.

Pour les usagers, ce système présente trois inconvénients majeurs :
- la carte qui reste dans le véhicule sans surveillance représente une certaine valeur numéraire (300 francs à l'achat) : il y a donc risque d'effraction ;
- l'utilisateur doit s'assurer que le crédit disponible dans la carte est toujours suffisant ;
- le réseau de distribution est faible, le déplacement peut être parfois long pour l'achat d'une nouvelle carte.

Chaque ville émettant sa propre carte prépayée et ne reconnaissant dans sa zone d'administration que celle-ci, l'usager devra disposer de plusieurs cartes pour accéder au même service selon le lieu géographique où il se trouve.

Différentes données caractéristiques du marché du stationnement sur voirie, données ci-dessous, montrent l'importance d'un tel marché :
- horodateurs :
   - nombre total installé : 30 000 (1 pour 21 places en moyenne),
   - prix de l'appareil : 50 000 Francs hors taxes (total investit : 1,5 milliard de francs hors taxes),
   - prix de revient à la place (achat + installation + branchement) : 2 800 francs hors taxes,
   - amortissement sur dix ans ;
- charges d'investissement hors taxes :
   - par place et par an ; 280 francs, donc total = 200 mégafrancs/an ;
- charges d'exploitation (maintenance, entretien, collecte) hors taxes :
   - par place et par an : de 500 francs à 1 300 francs, donc total = 800 mégafrancs/an ;
- charges financières d'exploitation : négligeables.

Un second document de l'art connu, référencé [2] en fin de description, décrit un système de télépéage. Pour le télépéage, les sociétés d'autoroute disposent d'un émetteur-récepteur radiofréquence (« transponder » à 5,8 Ghz). Un « transponder » est remis aux abonnés « télépéage » après que ceux-ci aient souscrit un abonnement local ou national avec la ou les sociétés autoroutières et un contrat sur le mode de paiement des prestations (télépéage prépayé, prélèvement automatique). Le « transponder » personnalisé (codes d'accès et d'authentification) lors de la souscription de l'abonnement est placé par l'usager derrière le pare-brise de son véhicule et permet à ce dernier d'accéder automatiquement, et sans immobilisation du véhicule, au service télépéage lors des franchissements des portiques RF (radiofréquence) des guichets d'accès.

Pour un tel transpondeur les problèmes qui se posent sont essentiellement liés au service offert. Compte tenu des objectifs des exploitants, de la direction des routes et des besoins des usagers, l'ouverture du télépéage vers une nouvelle clientèle est inéluctable. Ce système de l'art connu ne répond pas dans sa conception à de tels nouveaux marchés.

Les chiffres clés du marché actuel du télépéage sont les suivants :
- nombre d'usagers quotidiens : 100 000, soit 1/3 du total des abonnés ;
- chiffre d'affaires moyen réalisé par abonné sur les paiements télépéage : 1 600 francs (prix moyen de la consommation télépéage = 15 francs) ;
- coût de l'abonnement annuel : environ 530 francs (caution de la carte de l'art connu à la disposition de l'utilisateur = 300 francs) ;
- chiffre d'affaires annuel moyen réalisé par les paiements : 550 000 000 francs ;
- chiffre d'affaires réalisé par les abonnements : 160 000 000 francs.

Le télépéage actuel présente les avantages et les inconvénients suivants :
- il évite les files d'attente aux guichets pour les paiements ;
- il permet une économie de 30 % sur le paiement des parcours.

Par contre :
- il n'y a pas de continuité sur l'ensemble du réseau autoroutier ;
- le prix de l'abonnement annuel représente en moyenne 33 % du prix des consommations effectives ;
- un tel service est cher pour des usagers occasionnels, tels que des vacanciers.

Les attentes sur le service télépéage sont les suivantes :
- pour les exploitants et la direction des routes :
   - accroître la fluidité du trafic autoroutier,
      * diminution des engorgements aux guichets,
      * continuité de la circulation sur l'ensemble du réseau autoroutier,
   - avoir un guichet unique : télépéage universel inter-sociétés,
   - réduire les risques liés aux paiements numéraires (vols, fraudes, etc..) aux guichets,
   - réduire les frais de gestion (environ 26 %),
   - accroître la part du télépéage/paiement monétique qui représentent environ 60 % des transactions,
   - atteindre un million d'usagers télépéage en l'an 2000 ;
- pour les usagers :
   - obtenir un prix de l'abonnement télépéage plus abordable pour les usages occasionnels (migrations en période de vacances),
   - éviter les attentes aux guichets,
   - avoir une continuité de circulation sur l'ensemble du réseau,
   - avoir un service facile d'accès (si possible à partir du véhicule pour s'adapter aux conditions de circulation),
   - avoir des systèmes monétiques embarqués.

Un troisième document de l'art connu, référencé [3] en fin de description, décrit un procédé permettant des transactions de paiement à distance en utilisant des terminaux mobiles. Dans une application au péage de parking, lors de l'arrivée d'un véhicule usager dans une zone de parking, une station de base reliée à un ordinateur central émet des informations de chargement des caractéristiques liées à la zone de parking et d'autres informations basées sur les différentes zones de parking de la ville concernée. Cet usager peut alors activer le service parking à partir de son terminal mobile, et communiquer au serveur en charge de la gestion du service les références de la zone de parking sur lequel il entend stationner son véhicule, puis envoyer un message vers la station de base pour obtenir le droit d'utiliser une place de parking. Lorsque, après une certaine durée de stationnement cet usager vient récupérer son véhicule, il envoie, à l'aide de son terminal, un message de fin de stationnement à l'ordinateur central, via la station de base. Son compte, dans une base de donnée parking, est alors débité de la somme correspondant à la durée de stationnement.

Un tel procédé n'utilise pas de terminal spécifique dans le véhicule. Il nécessite un dialogue à l'entrée et à la sortie d'une zone parking avec une station de base. Il ne permet pas un contrôle visuel de bon paiement des taxes de stationnement par les agents chargés de cette vérification qui, de ce fait, doivent systématiquement s'enquérir auprès du serveur central de la conformité des droits de tous les véhicules stationnés sur la zone contrôlée.

Un quatrième document de l'art antérieur, référencé [4] en fin de description, décrit un procédé permettant de réaliser des transactions financières au moyen de téléphones mobiles, dans lesquels peut être insérée une carte de paiement multi-services rechargeable. Un des services envisagé et mentionné uniquement à titre indicatif est celui de paiement de taxe de stationnement.

Un tel procédé n'utilise pas non plus de terminal spécifique permettant une utilisation aisée et une vérification facile de bon paiement des taxes de stationnement.

Par rapport à ces solutions de l'art connu, l'objet de l'invention est de proposer un nouveau système mobile de télépaiement permettent d'offrir aux usagers de nouvelles possibilités de paiement, qui facilitent les besoins quotidiens spécifiques de ceux-ci en matière de stationnement dans les villes et de paiement sans immobilisation du véhicule sur les artères autoroutières et simplifie tout en la rendant plus efficace la gestion de ces services par les exploitants.

### Exposé de l'invention

La présente invention propose un système mobile de télépaiement de droits d'accès à au moins un service destiné à des usagers automobilistes, par exemple un service dédié au stationnement payant et/ou au télépéage, renouvelable à distance par radiomessagerie, comportant des moyens d'émission et un premier terminal portable comprenant un écran de visualisation installé dans un véhicule, caractérisé en ce qu'il comporte en outre une carte électronique à la disposition d'un usager, apte à être insérée dans ledit premier terminal de manière à l'activer et à donner à cet usager, lors de la réception d'un signal en provenance des moyens d'émission, un accès à ce service, un second terminal portable différent du premier terminal, à la disposition de cet usager, ayant accès à un serveur relié aux moyens d'émission, ce second terminal portable permettant à cet usager de demander le téléchargement de droits d'utilisation de ce (ou ces) service(s) sur le premier terminal portable et de les afficher sur l'écran de visualisation de celui-ci. contre le paiement effectué par le second terminal portable.

Contrairement aux documents, référencés [3] et [4], analysés précédemment, l'invention concerne un système utilisant un premier terminal portable spécifique embarqué qui permet un contrôle visuel du bon paiement des taxes de stationnement ou de télépéage par les agents chargés de cette vérification. De plus il n'y a pas de transfert d'argent vers ce terminal embarqué, mais de droits d'utilisation. Ce terminal ne contient donc jamais d'argent.

Dans un premier mode de réalisation le premier terminal portable est un récepteur de radiomessages.

Avantageusement le premier terminal portable peut être équipé d'une horloge interne programmable par le serveur via un logiciel exécutable qui lui est téléchargé, simultanément avec les droits d'utilisation du (ou des) service(s) demandé(s) et qui, dans le cas du stationnement débite, en fonction de la tarification en vigueur dans la zone où se trouve le véhicule, le temps alloué acheté par l'usager.

Avantageusement une carte prépayée peut être insérée dans le premier terminal portable et cette carte prépayée peut être débitée par celui-ci par l'intermédiaire de son horloge programmable sous les conditions imposées par le serveur lors de l'activation du service par le logiciel exécutable qui lui est téléchargé.

Le second terminal portable peut être un téléphone cellulaire, un Publiphone (marque déposée) ou un terminal spécifique qui peut être équipé d'un lecteur de carte.

Avantageusement le serveur de radiomessagerie est un serveur de téléphonie cellulaire.

Avantageusement la carte électronique est une carte virtuelle.

Le réseau de communication peut être un réseau radio, un réseau filaire ou un réseau cellulaire.

Avantageusement le second terminal portable, dans une zone géographique, déterminée a accès à un même serveur local relié au serveur central. Avantageusement ledit système comprend des balises antennes HF disposées respectivement sur des horodateurs et reliées à une unité de commande, permettant d'envoyer un signal périodique d'interrogation de présence, dans leurs aires de contrôle respectives, des premiers terminaux portables embarqués dans les véhicules en stationnement, afin de gérer la situation individuelle de chacun de ceux-ci.

Ainsi le système mobile de télépaiement par carte rechargeable à distance par radiomessagerie s'applique à de nouveaux services dédiés au stationnement payant sur voirie, et/ou au passage des péages des autoroutes. Dans le premier cas il est utilisé en lieu et place des horodateurs, dans le second cas il vient en complément des systèmes télépéages des sociétés d'autoroute.

Ces services sont commandés par l'usager selon ses besoins au moyen des moyens de commande. Concernant par exemple le stationnement, l'usager adapte son temps de stationnement à son besoin : quel que soit le lieu où il se trouve par rapport à son véhicule, il peut commander un crédit d'unités de durée allouée (la facturation et le paiement de ce crédit se faisant sur un serveur du réseau intelligent dédié au service), ce crédit est téléchargé sur le terminal portable (activé par la carte) embarqué dans le véhicule de l'usager. Le terminal portable se charge d'afficher sur son écran le ticket électronique relatif au droit de stationnement de l'usager et du décompte du temps alloué.

Pour un fonctionnement de télépéage, le système de l'invention présente les avantages suivants :
- par rapport aux sociétés autoroutières :
   - mettre le service télépéage à la portée des usagers du téléphone et des réseaux cellulaires (téléphone mobile, radiomessagerie) en particulier, ce qui présente un potentiel « inespéré » pour ce marché avec :
      * six millions d'abonnés au mobile,
      * deux millions d'abonnés radiomessagerie,
   - créer les conditions techniques et économiques pour atteindre effectivement le million d'usagers télépéage en 2000-2001 :
      * en réalisant l'évolution technologique : carte monoservice → carte polyservices
      * en créant un « pager » faible coût qui sera acheté par l'abonné, avec les projections actuelles sur le prix : environ 300 F (prix de la caution actuelle de la carte),
      * avec un coût de l'abonnement télépéage masqué,
      * avec une couverture nationale du service ;
   - permettre le doublement du chiffre d'affaires télépéage par apport de la clientèle dite « marginale » :
      * en faisant basculer vers cette forme de paiement le budget « autoroute » de l'automobiliste qui utilise occasionnellement le réseau autoroutier lors des périodes de vacances,
      * avec un budget moyen annuel du client « marginal » d'environ 980 F (données « que choisir » juin 1998, budget annuel 1997 de l'automobiliste) ;
   - réduire les charges d'exploitation des sociétés autoroutières en passant des paiements au guichet aux solutions monétiques télépéage ;
   - obtenir une amélioration générale de la qualité du service autoroutier (gain de temps, diminution du stress du personnel autoroutier, ainsi plus disponible aux guichets, etc.) ;
- par rapport aux usagers :
   - faire du télépéage un service au public :
      * facilité par la réduction des coûts : abonnement global moins cher que le seul télépéage actuel,
      * accessible à toute heure et en tout lieu,
   - ouvrir le télépéage vers la clientèle « marginale » au grand public :
      * avec une clientèle occasionnelle qui n'est intéressée par le télépéage que lors des transhumances estivales, hivernales, etc..
      * formant un réservoir potentiel pour atteindre effectivement le million d'abonnés espérés,
   - réduction effective des coûts des consommations :
      * par les tarifs et les bonus.

### Brève description des dessins

- Les figure 1 et 2 illustrent le fonctionnement du système de l'invention dans une application au stationnement payant ;
- la figure 3 illustre le système de l'invention, tel qu'illustré sur la figure 2, dans une application au télépaiement interactif par horodateur ;
- les figures 4 et 5 illustrent le fonctionnement du système de l'invention dans une application au télépéage ;
- la figure 6 illustre les transferts d'informations entre le récepteur de radiomessages, la carte électronique, et un émetteur-récepteur HF, dans une variante du système de l'invention ;
- la figure 7 illustre le terminal portable du système de l'invention tel que représenté sur la figure 6 ;
- la figure 8 illustre le transfert d'informations entre un serveur local et un serveur central dans une application du système de l'invention au stationnement payant.

### Exposé de modes de réalisation

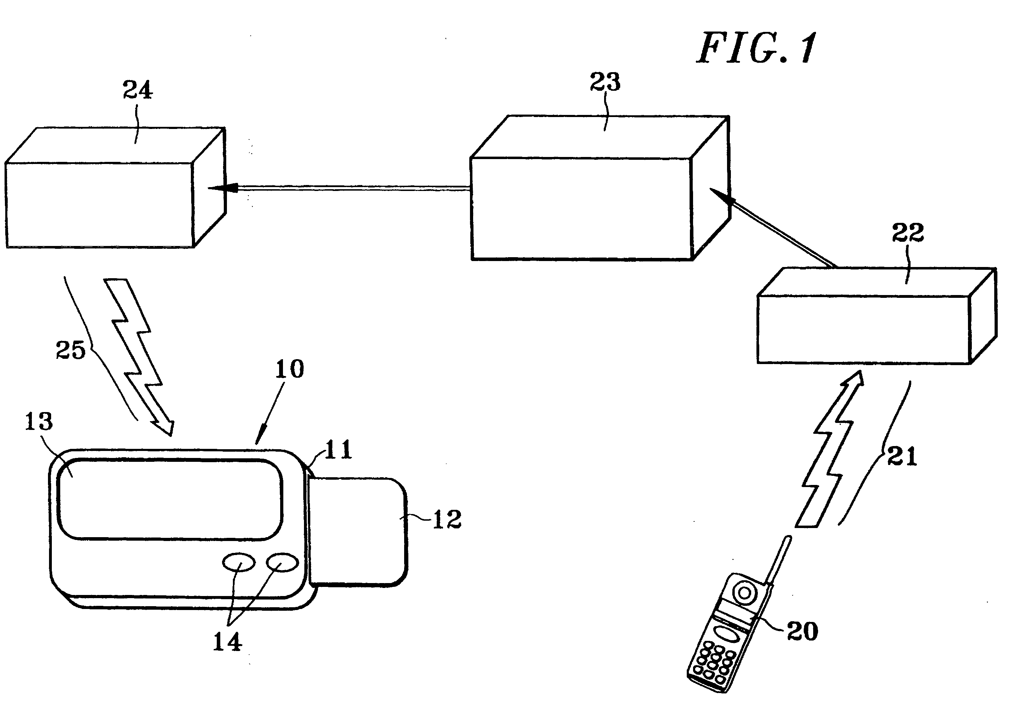

La présente invention, comme illustré sur la figure 1, concerne un système mobile de télépaiement par carte électronique spécifique 12, de type virtuel ou non, rechargeable à distance par radiomessagerie au sens large, c'est-à-dire par radiomessagerie ou téléphonie cellulaire (normes POCSAG, GSM...), comportant un serveur de radiomessagerie 24, un terminal portable spécifique 10 embarqué dans un véhicule, qui peut être de type « Pager », c'est-à-dire uniquement récepteur de radiomessages, ou de type téléphonique portable, c'est-à-dire à la fois récepteur de radiomessages et émetteur, et une telle carte électronique 12 qui s'insère dans ce terminal 10 de manière à l'activer et à donner à l'usager, propriétaire de ladite carte, un accès à des services dédiés au stationnement payant ou au télépéage. Le terminal portable 10 sans carte à puce 12 est un élément inerte. Ce n'est qu'une fois la carte 12 insérée que celui-ci est activé par le fait que celle-ci contient tous les éléments dynamiques des droits d'accès au service, par exemple et entre autres les codes SIM de l'usager (« Subscriber Identification Module »). Ce système comprend, en outre, des moyens de commande 20 à la disposition de cet usager, permettant le téléchargement de droits d'utilisation d'un desdits services par le serveur de radiomessagerie 24 sur le terminal portable 10.

Sur la figure 1 est illustré le fonctionnement du système de l'invention dans une application au paiement de taxes de stationnement. Sur cette figure sont représentés le terminal portable 10 formant un boîtier comprenant un réceptacle 11 apte à recevoir la carte spécifique 12, un écran de visualisation 13, ainsi que plusieurs touches de commande 14. Les moyens de commande 20 sont en liaison par un réseau de communication 21 à un serveur local 22 relié à un serveur central 23 lui-même relié au serveur de radiomessagerie 24. Ce serveur de radiomessagerie 24 permet d'envoyer des messages au terminal portable 10. Ces moyens de commande 20 peuvent être un téléphone cellulaire par exemple de type GSM, comme représenté sur la figure 1, un Publiphone ou tout autre terminal spécifique.

Le réseau de communication 21 peut être, comme ici, un réseau cellulaire par exemple de type GSM, DECT...., un réseau filaire ou un réseau radio.

Les liaisons 25 entre le serveur de radiomessagerie 24 et le terminal portable 10 sont des liaisons de radiomessagerie au sens large, c'est-à-dire des liaisons de radiomessagerie, par exemple à la norme POCSAG ou des liaisons de téléphonie cellulaire (GSM..).

Comme illustré sur cette figure, l'usager qui a introduit sa carte 11 dans le terminal portable 10 réalise une commande de téléchargement auprès du serveur local 22, à partir de son téléphone cellulaire 20. Ce téléphone 20 peut avantageusement être équipé d'un lecteur de carte de manière à permettre un paiement à partir de ce téléphone directement en ligne, par un porte-monnaie électronique ou par carte bancaire.

Pour effectuer le téléchargement il y a authentification de l'usager par son numéro SIM, et éventuellement par un code confidentiel PIN (Personal Identification Number).

Pour des raisons de simplicité et d'efficacité le code SIM (module d'identification de l'abonné) du téléphone cellulaire de l'usager peut être le même que celui du terminal portable 10 embarqué dans le véhicule.

Les caractéristiques de la commande sont véhiculés vers le serveur de radiomessagerie 24. Le serveur de radiomessagerie initialise alors le téléchargement de droits d'utilisation désirés. Les messages émis alors sont cryptés, authentifiés (avec un authentifiant interne au serveur : par exemple un algorithme), et signés, référence étant faite aux caractéristiques de la commande (montant, date). Une signature correspondant à un virement daté, le reniement de la commande peut ainsi être évité.

Dans l'application au stationnement payant la commande de téléchargement consiste en une commande de temps de stationnement. Le téléchargement est alors un transfert de temps de stationnement et des authentifiants de message par radiomessagerie. L'écran de visualisation 13 du terminal portable peut alors afficher l'heure de fin de stationnement autorisé ainsi que la date.

Lorsque les moyens de commande sont un Publiphone ou un téléphone cellulaire, le serveur local peut demander à la carte bancaire utilisée de renvoyer le certificat émis avec signature.

Un exemple d'un mode de fonctionnement du service parking va être considéré ci-après. On a ainsi la succession d'étapes suivantes :
(a) Appel du serveur parking d'une ville par l'usager, lequel aura préalablement inséré dans son téléphone, par exemple de type GSM sa carte bleue ou son porte-monnaie électronique. Le terminal embarqué dans le véhicule étant alors activé.
(b) Cet appel est réalisé sur le lieu désiré de stationnement du véhicule. Les antennes du réseau GSM localisent alors géographiquement le lieu de l'appel. Le serveur reçoit cette information et l'attribue à une zone de tarification préalablement établie.
(c) Par affichage ou par messagerie vocale le serveur invite l'usager à choisir une durée de stationnement, avec éventuellement une durée limite maximale liée à la zone de stationnement concernée.
(d) L'usager fait son choix et le communique au serveur.
(e) Si l'usager utilise un porte-monnaie électronique, le serveur vient directement prélever dans celui-ci le montant relatif au service demandé par l'usager. Si l'usager utilise une carte bleue, le serveur fait une connexion vers le serveur du GIE des cartes bancaires et réalise une transaction bancaire sécurisée dans laquelle l'usager doit taper sur le clavier de son mobile GSM son code PIN bancaire confidentiel.
(f) Si la transaction aboutit, le serveur de parking valide celle-ci et envoie en retour un message qui est le certificat d'autorisation de stationnement correspondant au service demandé. Ce message s'affiche à la fois sur le terminal embarqué dans le véhicule, en étant visible de l'extérieur de celui-ci au travers du pare-brise, et sur l'écran du téléphone mobile GSM dans lequel il peut être enregistré pour preuve de la transaction. Le message affiché par le terminal embarqué dans le véhicule comprend toutes les informations utiles pour un contrôle de bon paiement. Par ailleurs, pour éviter les contrefaçons, le message complet envoyé par le serveur contient par exemple un certificat chiffré non affiché mais enregistré dans une mémoire du terminal embarqué destinée à cet usage.
(g) L'usager qui aurait sous estimé son temps de stationnement peut alors le prolonger sans revenir à son véhicule. Dans ce cas l'usager qui a déjà réalisé les phases précédentes (a-f) rappelle le serveur, qui lui présente l'option de service prolongement de son temps de stationnement. Sur confirmation de l'usager du choix de cette option, le serveur qui a gardé en mémoire la localisation du lieu de stationnement du véhicule indique uniquement à l'usager la durée de stationnement disponible compte tenu du temps que celui-ci a déjà épuisé et de la limite qu'impose la zone de stationnement. Dès lors l'usager et les serveur enchaînent les étapes d et f déjà décrites. Lorsque tout est validé, le certificat de stationnement est envoyé et reçu simultanément en deux lieux différents : sur le lieu où se trouve l'usager avec son téléphone cellulaire et sur le lieu où est stationné le véhicule.

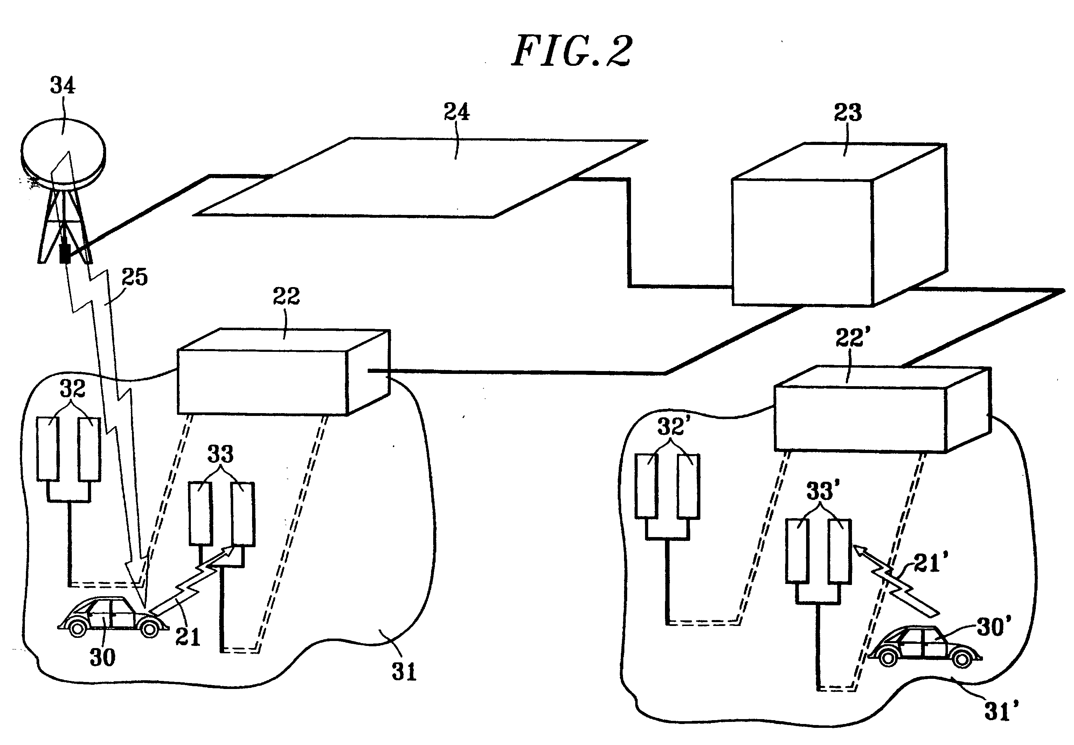

Sur la figure 2, deux usagers désirant utiliser un stationnement payant pour leurs véhicules respectifs 30 et 30' dans des zones géographiques 31, 31' dépendant de deux serveurs locaux distincts 22, 22' utilisent respectivement leur téléphone cellulaire, non représenté ici, pour demander le téléchargement d'unités de stationnement dans leurs terminaux embarqués 10 respectifs, non représentés ici. Outre le serveur central 23 et le serveur de radiomessagerie 24, déjà illustrés sur la figure 1, sont également représentées des antennes GSM 32, 33 et 32' et 33' et un antenne d'émission de radiomessagerie 34.

Dans le serveur central sont réalisées les opérations suivantes :
- accès service ;
- authentification demandeurs ;
- facturation clients et ventilation par zone géographique (par exemple par ville) ;
- commande de téléchargement des unités de stationnement au (ou aux) serveur(s) de radiomessagerie.

Dans différentes variantes de réalisation le terminal embarqué 10 peut contenir des fonctionnalités supplémentaires, par exemple :
- Une horloge interne programmable par le serveur de parking via un exécutable inséré dans le message d'autorisation de stationnement : ceci permet de réaliser pour l'usager une facturation au temps réel.
- Un système à carte prépayée et à horloge programmable par le serveur parking : dans ce cas l'usager enfiche la carte prépayée dans le système embarqué dans le véhicule et appelle par son téléphone cellulaire le serveur pour activer le service. Le véhicule étant localisé, le serveur lui affecte la tarification de la zone concernée et envoie à destination du terminal embarqué l'exécutable de programmation de l'horloge dudit système embarqué pour débiter cette carte prépayée sous les conditions requises, ainsi que les certificats d'authentification qui permettent aux agents chargés de la vérification des droits de stationnement de s'assurer lors d'un contrôle de la légalité du système embarqué et de sa carte prépayée.
- Un système à carte prépayée, à carte virtuelle, ou à porte-monnaie électronique piloté directement par un horodateur du lieu de stationnement équipé de moyens spécifiques : dans ce cas le système embarqué dans le véhicule est bidirectionnel, il reçoit et transmet des données à courte distance (∼100 à 200 mètres) avec un horodateur doté lui aussi de moyens spécifiques pour gérer de manière autonome et en temps réel le stationnement d'un véhicule placé dans sa zone d'influence.

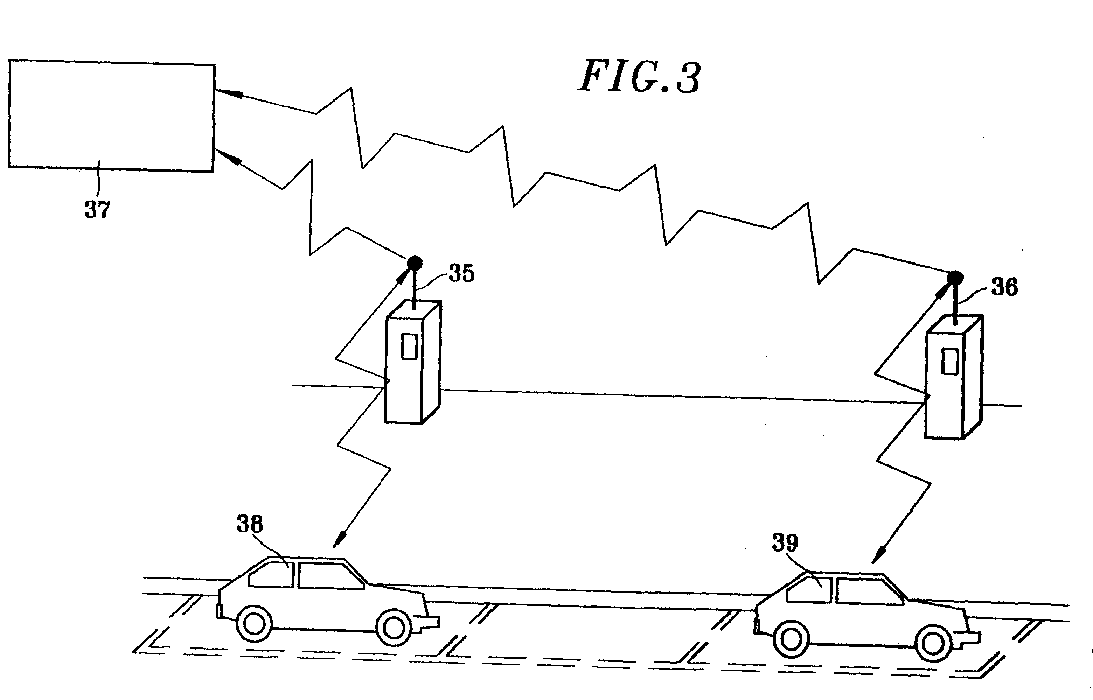

La figure 3 illustre une telle variante de réalisation du système de l'invention dans une application au télépaiement interactif par horodateur. Deux balises antennes HF 35 et 36 disposées respectivement sur deux horodateurs, et reliées à une unité de commande 37 permettent d'envoyer un signal périodique de questionnement des terminaux portables disposés dans deux véhicules 38 et 39.

On peut ainsi avoir les échanges de messages suivants entre les antennes HF et les terminaux portables :

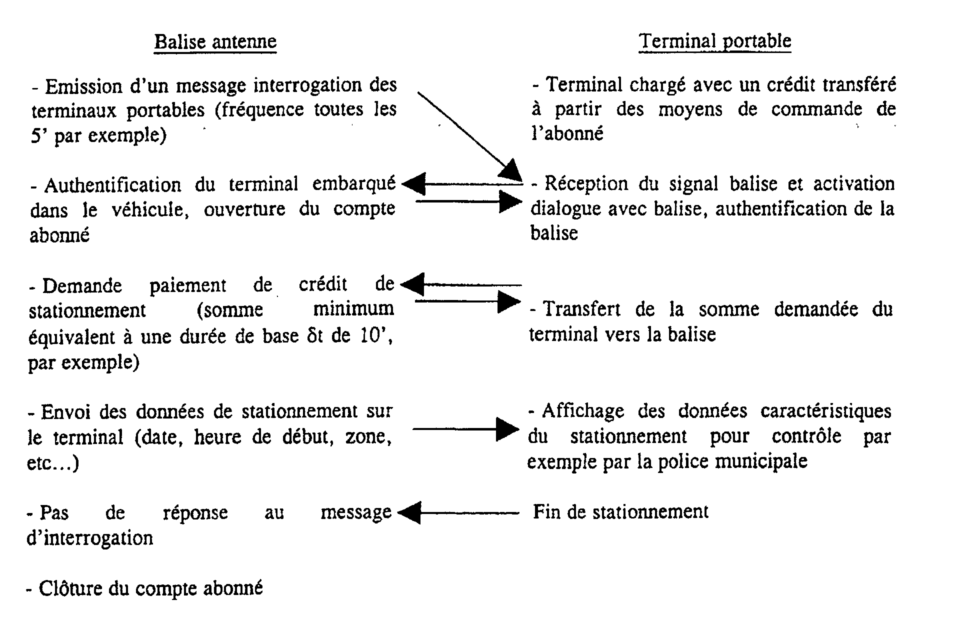

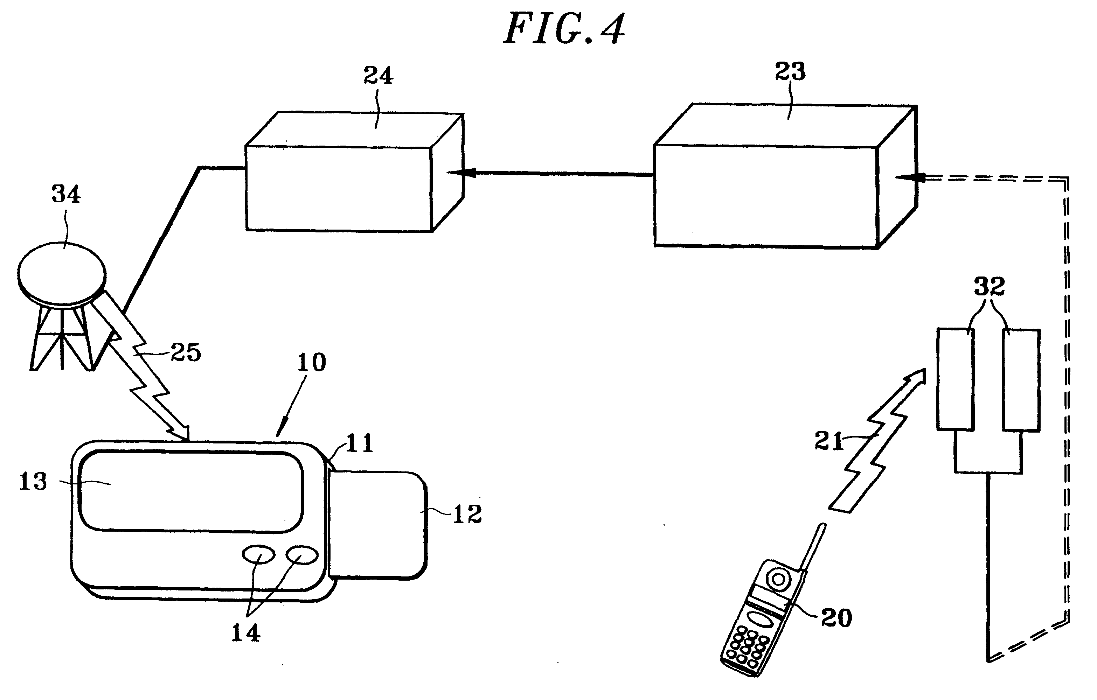

Sur la figure 4 est illustré le fonctionnement du système de l'invention dans une application au télépéage. Les références utilisées dans les figures 1 et 2 pour désigner les différents éléments du système de l'invention ont été conservées sur cette figure. Ainsi les moyens de commande 20, ici un téléphone cellulaire, sont reliés à des antennes 32 par une liaison 21. Ces antennes sont reliées à un serveur central 23 lui-même relié à un serveur de radiomessagerie 24 qui réalise une télécommande de données 25 vers le terminal portable 10 associé à la carte 12, via un émetteur 34.

Dans ce type de fonctionnement l'utilisation. d'un serveur local n'est plus nécessaire.

L'usager réalise un achat de crédit télépéage à partir du terminal 20 auprès du serveur central 23 par l'intermédiaire des antennes 32. Ce serveur central 23 réalise une authentification, une facturation, et une commande de service radiomessagerie auprès du serveur de radiomessagerie 24 qui réalise alors, par radiomessagerie, un transfert vers le récepteur de radiomessages 10 du crédit télépéage et un téléchargement sur la carte 12, via l'antenne d'émission 34 ou, selon un autre mode de fonctionnement, un transfert vers ce même récepteur de radiomessages 10 des codes personnels d'accès au(x) service(s) qui permettront le paiement à l'usager des droits de péage dont doit s'acquitter l'abonné.

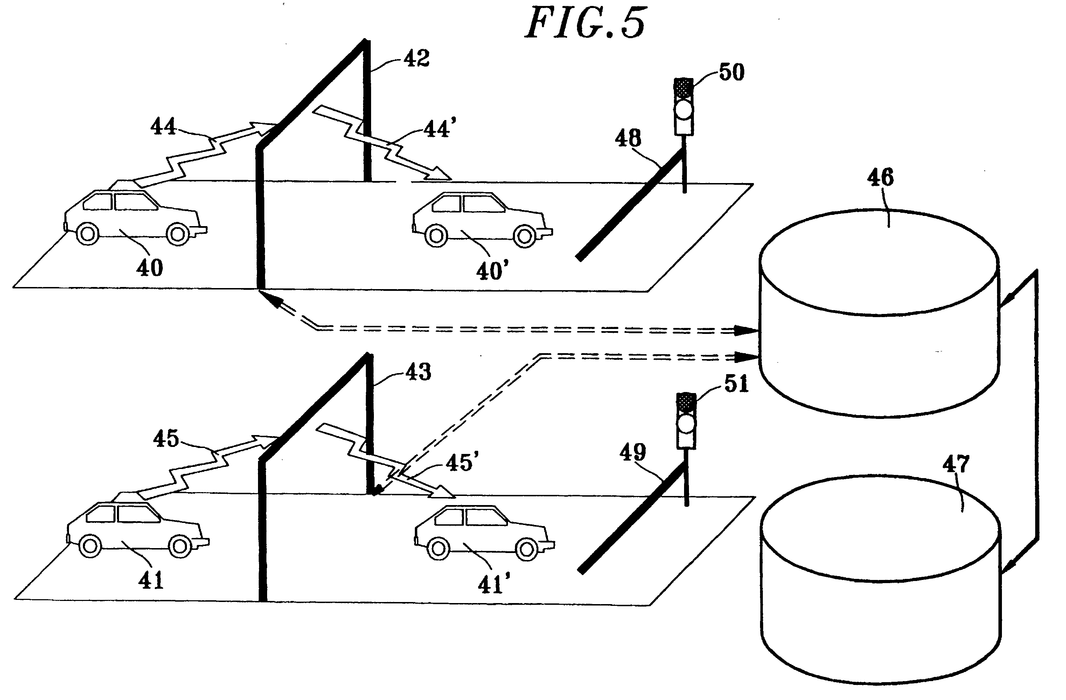

Sur la figure 5 un premier et un second véhicules sont représentés respectivement dans une première (40 et 41) et dans une seconde positions (40' et 41') au passage d'un portique de télépéage 42 ou 43 d'entrée ou de sortie d'autoroute.

Chacun de ces portiques 42 ou 43 permet de réaliser, par transmission de données 44 ou 45 un débit-crédit dans la carte de l'usager située dans le véhicule correspondant, par transfert de données à un serveur 46 des sociétés des autoroutes relié lui-même à un serveur 47 de la société opératrice.

Chaque portique 42 ou 43 commande l'ouverture ou non d'une barrière 48 ou 49 d'accès ou sortie d'autoroute, associé à un signal lumineux 50 ou 51.

Chaque portique 42 ou 43 permet de réaliser la capture du numéro CCP récepteur de radiomessagerie embarquée et/ou une lecture de la carte introduite dans celui-ci. Elle permet :
- d'accepter ou de refuser l'accès, par commande ou non de la barrière d'accès 48 ou 49 ;
- de commander la destruction d'une carte volée ;
- de commander l'écriture du point d'entrée à l'autoroute.

Le serveur 46 des sociétés des autoroutes réalise les opérations suivantes :
- capture du numéro d'identification carte (CCP) et/ou ;
- identification de l'émetteur-récepteur HF ;
- contrôle des droits de l'abonnement accès ;
- identification des portiques entrée/sortie ;
- facturation des droits de péage avec remise à jour du crédit de l'émetteur-récepteur HF.

Le serveur 47 de la société opératrice réalise les opérations suivantes :
- consultation du registre des abonnés : code CCP, droits d'accès ;
- actualisation des situations.

Ce serveur 47 permet de connaître les services auxquels est abonné un usager : stationnement, péage..., ou de savoir si celui-ci a été interdit d'accès (cas d'impayés par exemple), auquel cas sa carte peut être détruite.

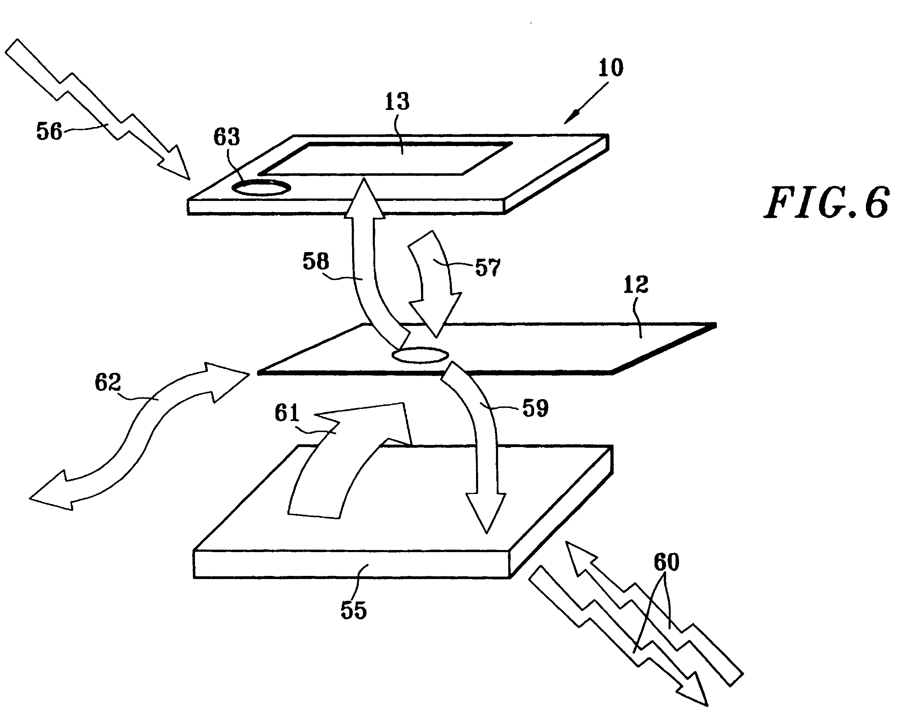

Dans cette application au télépéage, le terminal portable embarqué 10, dans lequel est introduit une carte à puce utilisateur 12 permettant de le valider, est associé à un transpondeur RF (radiofréquence) de télépéage 55, comme illustré sur la figure 6. Il en est de même dans le cas du télépaiement interactif par horodateur, tel qu'illustré sur la figure 3.

Sont illustrés sur la figure 6 :
- la réception et le traitement des radiomessages 56 autoroutes ou parking ;
- le téléchargement 57 des certificats des unités de temps utilisées et du numéro de carte crypté ;
- l'affichage 58 des unités de temps et la signature des messages affichés ;
- l'envoi 59 du code d'authentification (CCP) de la carte à puce ;
- l'échange de donnés 60 avec les portiques autoroutes (5,8 Ghz) ou les balises antennes de stationnement, avec actualisation du compte, débit/crédit ;
- le débit péage 61, certificat ;
- l'éventuelle connexion 62 vers une électronique de contrôle du véhicule pour permettre éventuellement, après échange de codes de contrôle, une immobilisation du véhicule par action sur un organe sensible de celui-ci s'il a, par exemple, été volé.

L'élément référencé 63 sur le terminal embarqué 10 à titre d'exemple est un récepteur de rayonnement infrarouge ou radiofréquence permettant aux autorités de police de déclencher l'affichage sur l'écran 13 des authentifiants qui certifient la validité des messages affichés.

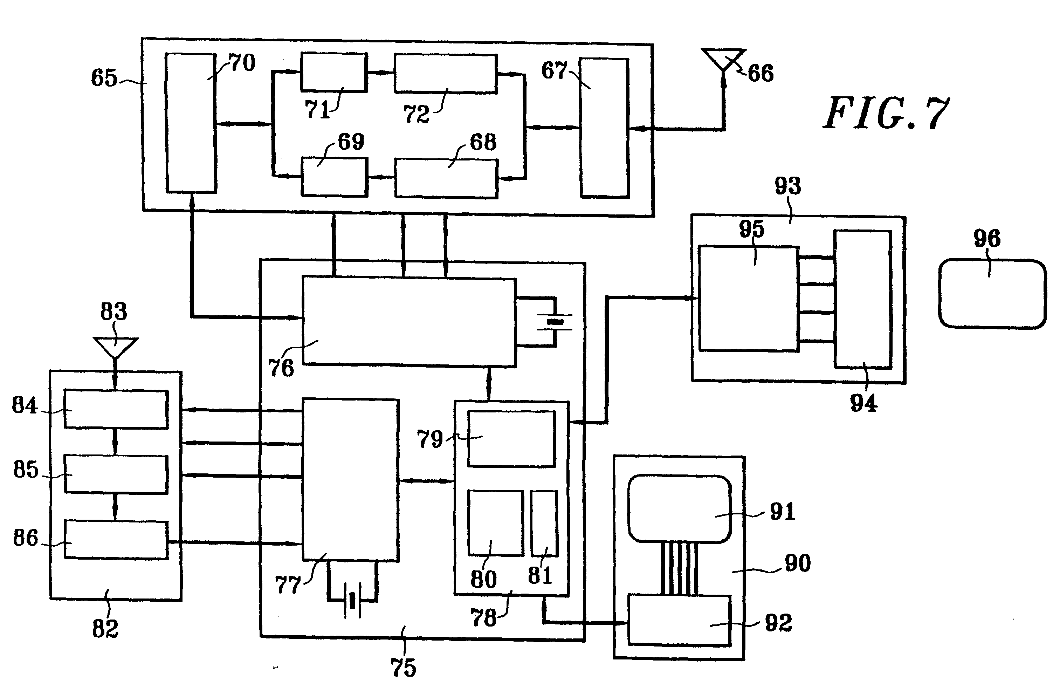

La figure 7 illustre l'ensemble terminal portable + carte émetteur-récepteur HF tel que représenté sur la figure 6. On a ainsi :
- l'émetteur-récepteur HF (ou badge) 65 avec une entrée/sortie HF 66 (5,8 Ghz), qui comprend :
   - un duplexeur 67,
   - un amplificateur faible bruit 68,
   - un premier composant de traitement de signal 69,
   - un convertisseur analogique/numérique 70,
   - un second composant de traitement du signal 71,
   - un amplificateur de puissance 72 ;
- le terminal portable comprenant :
   - un circuit de contrôle 75 comprenant :
      * un décodeur HF 76,
      * un décodeur RF 77,
      * un circuit de traitement 78 comportant un processeur 79, une mémoire vive 80, une mémoire morte 81 ;
   - un récepteur RF 82 avec une entrée RF (929-932, 934-941 Mhz) 83 :
      * un amplificateur faible bruit 84,
      * un composant de traitement du signal 85,
      * un convertisseur analogique/numérique 86
   - un interface utilisateur 90 comprenant :
      * un écran d'affichage 91,
      * une unité interface 92 ;
   - un lecteur de carte 93 comportant :
      * un lecteur de carte 94 proprement dit dans lequel peut être introduit la carte à puce 96,
      * une unité interface 95.

L'ensemble de ces circuits est bien connu de l'homme de l'art, comme décrit dans les documents [5] et [6].

Dans une variante de réalisation, on peut également utiliser le système de l'invention pour réaliser un porte-monnaie électronique embarqué. On associe alors un clavier au terminal portable de l'invention. On peut avoir ainsi la succession des opérations suivantes :
- introduction de la carte dans le lecteur de carte ;
- frappe au clavier d'un ordre pour demander une opération de transfert de fond, et pour frapper le code PIN carte ;
- si le code frappé est le bon, frappe au clavier du montant nécessaire ;
- validation.

Il y a eu ainsi transfert dudit montant de la carte sur le terminal.

On peut également avoir la succession inverse de ces opérations :
- frappe du code PIN de la carte ;
- si le code frappé est le bon, transfert du montant restant du terminal sur la carte.

Un tel fonctionnement permet de ne pas bloquer une carte pour une seule opération, mais de pouvoir l'utiliser pour de multiples opérations.

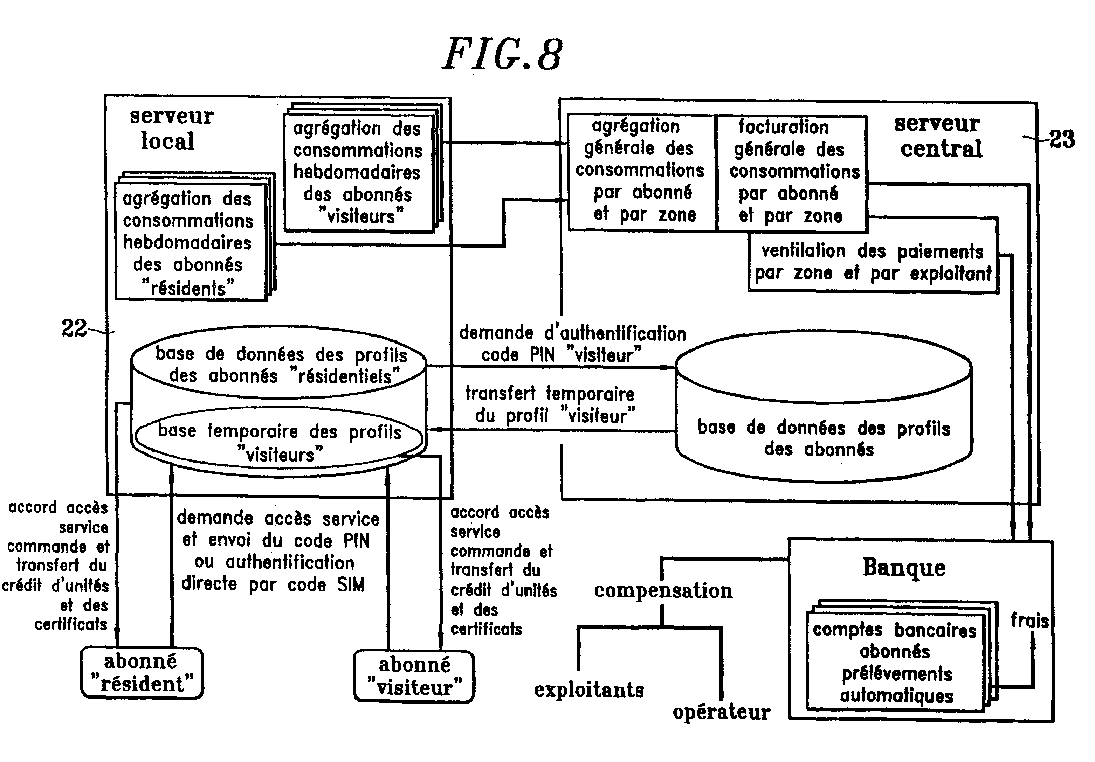

La figure 8 illustre le système de l'invention en fonctionnement dynamique dans une application au stationnement payant.

### REFERENCES

[1] FR-A-2 615 304

[2] « Projet TIS Phase 2 » (15/7/1996, Cegelec-CGA, « Document de spécification et conception du système »)

[3] WO 97/45814

[4] EP-A-0 785 534

[5] « Selector Guide For Basic FLEX™ Pager » (E-Mail Motorola, 15/10/1997)

[6] « The Role of Digital Signal Processors In Pager Technology » de Xiao-An Wang et Dwane Bell (pages 36, 38, 42 et 44, « RF Tutorial », décembre 1996)

## Revendications

1. Système mobile de télépaiement de droits d'accès à au moins un service destiné à des usagers automobilistes, qui est un service dédié au stationnement payant et/ou au télépéage, renouvelable à distance par radiomessagerie, comportant des moyens d'émission et un premier terminal portable (10) comprenant un écran de visualisation (13) installé dans un véhicule, **caractérisé en ce qu'**il comporte en outre une carte électronique (12) à la disposition d'un usager, apte à être insérée dans ledit premier terminal de manière à l'activer et à donner à cet usager, lors de la réception d'un signal en provenance des moyens d'émission, un accès à ce service, un second terminal portable (20) différent du premier terminal, à la disposition de cet usager, ayant accès à un serveur (23) relié aux moyens d'émission, ce second terminal portable (20) permettant à cet usager de demander le téléchargement (25) de droits d'utilisation de ce (ou ces) service(s) sur le premier terminal portable (10) et de les afficher sur l'écran de visualisation (13) de celui-ci, contre le paiement effectué par le second terminal portable (20).

2. Système selon la revendication 1, dans lequel le premier terminal portable (10) est un récepteur de radiomessages.

3. Système selon la revendication 2, dans lequel le premier terminal portable (10) est équipé d'une horloge interne programmable par le serveur (23) via un logiciel exécutable qui lui est téléchargé (25), simultanément avec les droits d'utilisation du (ou des) service(s) demandé(s) et qui, dans le cas du stationnement payant, débite, en fonction de la tarification en vigueur dans la zone où se trouve le véhicule, le temps alloué acheté par l'usager.

4. Système selon les revendications 2 ou 3, dans lequel une carte prépayée est insérée dans le premier terminal portable (10), et dans lequel cette carte prépayée est débitée par celui-ci par l'intermédiaire de son horloge programmable sous les conditions imposées par le serveur (23) lors de l'activation du service par le logiciel exécutable qui est téléchargé (25).

5. Système selon la revendication 1, dans lequel le second terminal portable (20) est un téléphone cellulaire, un Publiphone (marque déposée) ou un terminal spécifique.

6. Système selon la revendication 5, dans lequel le téléphone cellulaire est équipé d'un lecteur de carte.

7. Système selon la revendication 1, dans lequel le serveur (23) est relié à un serveur de radiomessagerie (24) qui est un serveur de téléphonie cellulaire.

8. Système selon la revendication 1, dans lequel la carte électronique (12) est une carte virtuelle.

9. Système selon la revendication 1, dans lequel le réseau de communication (21) est un réseau radio, un réseau filaire ou un réseau cellulaire.

10. Système selon la revendication 1, dans lequel les droits d'utilisation sont un crédit d'unités de durée allouée.

11. Système selon la revendication 1, dans lequel le second terminal portable (20), dans une zone géographique déterminée (31, 31'), a accès à un même serveur local (22, 22') relié au serveur central (23).

12. Système selon la revendication 1 comprenant des balises antennes HF (35, 36) reliées à une unité de commande (37), permettant d'envoyer un signal périodique d'interrogation de présence, dans leurs aires de contrôle respectives, des premiers terminaux portables (10) embarqués dans les véhicules en stationnement, afin de gérer la situation individuelle de chacun de ceux-ci.

## Patentansprüche

1. Mobiles System zur Fernbezahlung von Zugangsrechten zu mindestens einer für die Benutzung durch Autofahrer vorgesehenen Dienstleistung, wie etwa eine auf gebührenpflichtiges Parken und/oder Fernmaut gerichtete, das auf Entfernung über Funkfernübertragung erneuerbar ist, mit Sendemitteln und einem in einem Fahrzeug installierten ersten mobilen Endgerät (10) mit einem Sichtanzeigebildschirm (13), **dadurch gekennzeichnet, dass** es außerdem umfasst:
eine einem Benutzer zur Verfügung stehende elektronische Karte (12), welche in das erste Endgerät eingeführt werden kann, um aktiviert zu werden und diesem Benutzer bei Empfang eines von Sendemitteln kommenden Signals Zugang zu dieser Dienstleistung zu bieten,
ein von dem ersten Endgerät verschiedenes, diesem Benutzer zur Verfügung stehendes zweites mobiles Endgerät (20), das zu einem mit den Sendemitteln verbundenen Server (23) Zugang hat, wobei das zweite mobile Endgerät (20) dem Benutzer ermöglicht, die Fernaufladung (25) von Benutzungsrechten für diese Dienstleistung(en) gegen die an dem zweiten mobilen Endgerät (20) ausgeführte Bezahlung am ersten mobilen Endgerät (10) anzufordern und an dessen Sichtanzeigebildschirm (13) anzuzeigen.

2. System nach Anspruch 1, wobei das erste tragbare Endgerät (10) ein Funkfernübertragungs-Empfänger ist.

3. System nach Anspruch 2, wobei das erste mobile Endgerät (10) mit einem internen Taktgeber ausgestattet ist, der durch den Server (23) über eine ausführbare Software (25), die gleichzeitig mit den Benutzungsrechten für die angeforderte(n) Dienstleistung(en) in diesen ferngeladen wird, programmierbar ist, und die es (das Endgerät) im Fall des gebührenpflichtigen Parkens je nach der in der Zone, in der sich das Fahrzeug befindet, gültigen Gebührenordnung mit der von dem Benutzer erworbenen Nutzungszeit belastet.

4. System nach den Ansprüchen 2 oder 3, wobei eine vorbezahlte Karte in das erste mobile Endgerät (10) eingeführt wird, und wobei diese vorbezahlte Karte von diesem mittels seinem programmierbaren Taktgeber unter den von dem Server (23) auferlegten Bedingungen bei Aktivierung der Dienstleistung durch die ferngeladene ausführbare Software (25) belastet wird.

5. System nach Anspruch 1, wobei das zweite mobile Endgerät (20) ein Zellentelefon, ein Publiphone (eingetragene Marke) oder ein spezifisches Endgerät ist.

6. System nach Anspruch 5, wobei das Zellentelefon mit einem Kartenleser ausgerüstet ist.

7. System nach Anspruch 1, wobei der Server (23) mit einem Funkfernübertragungs-Server (24) verbunden ist, der ein Zellentelefonie-Server ist.

8. System nach Anspruch 1, wobei die elektronische Karte (12) eine virtuelle Karte ist.

9. System nach Anspruch 1, wobei das Kommunikationsnetz (21) ein Funknetz, ein Leitungsnetz oder ein Zellennetz ist.

10. System nach Anspruch 1, wobei die Benutzungsrechte ein Guthaben an Einheiten einer erlaubten Zeitdauer sind.

11. System nach Anspruch 1, wobei das zweite tragbare Endgerät (20) in einer bestimmten geographischen Zone (31,31') Zugang zu einem gleichen, mit einem zentralen Server (23) verbundenen lokalen Server (22,22') hat.

12. System nach Anspruch 1, mit HF-Funkfeuerantennen (35,36), die mit einer Steuereinheit (37) verbunden sind und es ermöglichen, in ihren betreffenden Kontrollbereichen ein periodisches Signal zum Abfragen der Präsenz der in den geparkten Fahrzeugen befindlichen ersten mobilen Endgeräte (10) zu senden, um deren jeweilige individuelle Situation zu steuern bzw. zu verwalten.

## Claims

1. Mobile system for the telepayment of access rights to at least one service for use by motorists, e.g. a service intended for the payment of parking and/or teletolling, renewable remotely by radio paging, comprising transmission means and a first portable terminal (10) comprising a display screen (13) onboard a vehicle, **characterized in that** it also comprises an electronic card (12) available to a user and insertable into said first terminal so as to activate it and give said user, during the reception of a signal from the transmission means, access to said service, a second portable terminal (20), different from the first terminal, available to said user, having access to a server (23) connected to the transmission means, said second portable terminal (20) enabling said user to request the downloading (25) of use rights to said service or services on the first portable terminal (10) and to display the same on the display screen (13) thereof against the payment performed by the second portable terminal (20).

2. System according to claim 1, wherein the first portable terminal (10) is a radio paging receiver.

3. System according to claim 2, wherein the first portable terminal (10) is equipped with an internal clock programmable by the server (23) via an executable software which is downloaded to it (25), simultaneously with utilization rights of the service or services demanded and which, in the case of parking, debits according to the tariffs in force in the zone where the vehicle is parked, the allotted time bought by the user.

4. System according to either one of claims 2 or 3, wherein a prepaid card is inserted in the first portable terminal (10), and wherein this prepaid card is debited by the latter through the intermediary of its programmable clock under the conditions imposed by the server (23) when the service is activated by the executable software with which it is loaded (25).

5. System according to claim 1, wherein the second portable terminal (20) are a cellular phone, a Publiphone (registered trademark) or a specific terminal.

6. System according to claim 5, wherein the cellular phone is equipped with a card reader.

7. System according to claim 1, wherein the server (23) is connected to a radio paging server (24), which is a cellular phone server.

8. System according to claim 1, wherein the electronic card (12) is a virtual card.

9. System according to claim 1, wherein the communications network (21) is a radio network, a wire network or a cellular network.

10. System according to claim 1, wherein the use rights are an allocated duration unit credit.

11. System according to claim 1, wherein the second portable terminal (20), in a given geographical area (31, 31'), has access to a same local server (22, 22') connected to the central server (23).

12. System according to claim 1 comprising HF aerial beacons (35, 36) connected to a control unit (37) making it possible to send a periodic presence interrogation signal, in their respective monitoring areas, of the first portable terminals (10) installed in parked vehicles, in order to menage the individual situation of each of them.
